# EUROPEAN PATENT SPECIFICATION

(11) **EP 0 940 407 B1**
(45) Date of publication and mention of the grant of the patent: **03.12.2003**
(21) Application number: 99301608.8
(22) Date of filing: 03.03.1999
(51) Int. Cl.: C07F 9/6574, C08K 5/527

(54) **Cyclic bis-phosphites**
Zyclische Bis-Phosphite
Bis-phosphites cycliques

(30) Priority: 06.03.1998 US 36206
(43) Date of publication of application: 08.09.1999
(73) Proprietor: GENERAL ELECTRIC COMPANY, Schenectady, NY 12345 (US)
(72) Inventor: Avakian, Roger W., Parkersburg, West Virginia 26101 (US); Prabhu, Vaikunth Sitaram, Morgantown, West Virginia 26505 (US); Gray, Carloss L., Belpre, Ohio 45714-0843 (US); Enlow, William Palmer, Belpre, Ohio 45714 (US)
(74) Representative: Wibbelmann, Jobst, Dr., Dipl.-Chem.

(56) References cited:
- EP-A- 0 472 071
- EP-A- 0 635 511
- EP-A- 0 785 210
- US-A- 3 467 733
- US-A- 4 956 406
- BATALOVA T.A.: "Cyclic diphosphites derived from 1,1'-methylenedinaphtol." RUSSIAN JOURNAL OF GENERAL CHEMISTRY., vol. 67, no. 9, 1997, pages 1406-1413, XP002104896

## Description

This invention concerns certain novel bis-cyclic phosphite compounds and polymeric materials stabilized therewith. More specifically, this invention concerns certain cyclic bis-phosphites, derived from, for example, 4,4'-6,6'-tetra-tert-butyl-2,2'-biphenol or 2,2'-methylene-bis-(4,6-di-tert-butylphenol) as well as homologues thereof, and the corresponding chlorophosphite derivative of 1,3-glycol. This invention also includes polymeric materials and articles made from polymeric materials that are stabilized against thermally-induced oxidative degradation by the presence therein of at least one of the cyclic bis-phosphites.

Synthetic polymeric materials such as polyamides, polyesters, polystyrenes, and polyolefins, particularly polypropylene, require stabilization against thermal degradation to prevent significant changes in the properties of the polymeric material during melt processing. For example, without adequate stabilization, the melt-flow rate of polypropylene changes significantly during its extrusion in the compounding of various formulations and products: Various cyclic phosphites and the use thereof in polyolefins are well known. See, for example, U.S. Pat. Nos. 3,441,633,3,467,733,3,488,407, 3,714,302, 4,252,750, 4,673,701, 4,956,406, and 5,594,053 as well as EP 0 635 511 Al. The novel cyclic phosphites provided by our invention are non-volatile and are effective process stabilizers for polymeric materials. Moreover, the phosphites of the present invention have lower melting points than the corresponding phosphites substituted in the 4,4' positions of the bis-aromatic rings.

### SUMMARY OF THE PRESENT INVENTION

The novel cyclic bis-phosphites provided by our invention are effective hydrolytic and thermal stabilizers for polymeric materials.

The cyclic bis-phosphite is a compound of the formula (I): 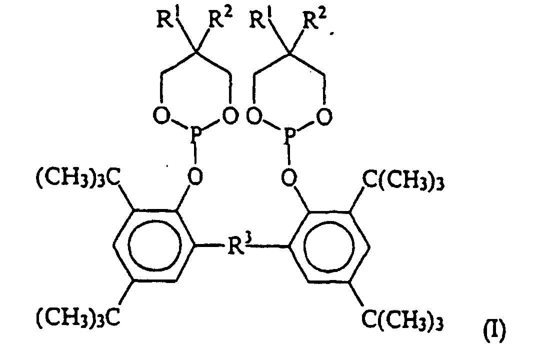 wherein each R¹ and R² is independently selected from hydrogen, alkyl radicals of from 1 to 17 carbon atoms, or wherein R¹ and R² are connected to form a five-membered, six-membered, or seven-membered cycloalkyl ring or substituted five-membered, substituted six-membered, or substituted seven-membered cycloalkyl ring, and R³ is an alkylidene radical of from 1 to 12 carbon atoms or a direct carbon to carbon bond.

Illustrative examples of the groups represented by R¹ and R² are hydrogen, methyl, ethyl, and propyl, and wherein R¹ and R² are connected to form a cyclopentyl, cyclohexyl or cycloheptyl residue as well as the corresponding lower alkyl substituted analogues of the cyclic residues. Illustrative examples of R³ include methylene, isopropylene, and ethylene.

Briefly, a method of preparing the cyclic bis-phosphite compounds of formula I comprises reacting a chlorophosphite having the formula (II) 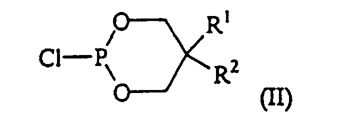 where R¹ and R² are defined above, with bis-phenols such as, for example, 4,4',6,6'-tetra-tert-butyl-2,2'-biphenol, in the presence of stoichiometric quantities of amine, preferably tertiary amine, as acid acceptor. In some embodiments of the present invention, different chlorophosphites of the formula (II) may be utilized to prepare a bis-phosphite wherein the R¹'s and R²'s all vary from one another or where the R¹'s match but the R²'s differ from one to the other.

Preferred bisphosphites include the following: 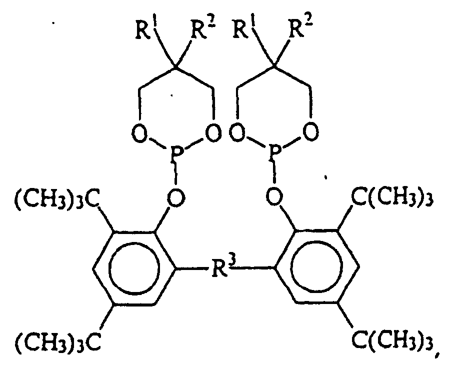 wherein each R¹ and R² is independently methyl, ethyl, or wherein R¹ and R² are connected to form a five-membered, six-membered, or seven-membered cycloalkyl ring or substituted five-membered, substituted six-membered, or substituted seven-membered cycloalkyl ring, and R³ is a carbon to carbon bond, methylene, ethylene, 1,1-ethyl, or isopropylene residue.

Specific preferred embodiments include the following bisphosphites: 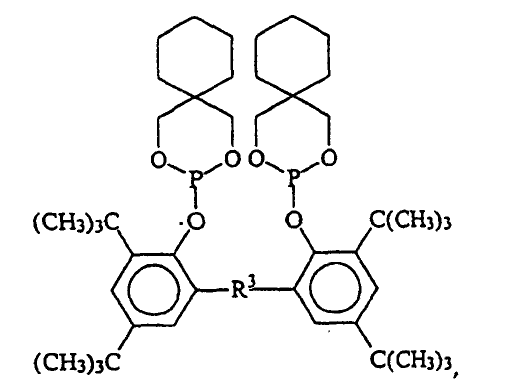 wherein R³ is a carbon to carbon bond, methylene, ethylene, 1,1-ethyl, or isopropylene residue.

An advantage of the present invention is that the hydrolytic stability is improved relative to past teachings due to the unique crystallinity of the molecule and the steric crowd around phosphorous.

Another advantage of the present invention includes better thermal stability and reduced volatility. Additionally, the high molecular weight, high phosphorous content, and good symmetry of the molecule is expected to give good polymer capability.

The cyclic bis-phosphite compounds of formula (I) may be used in a wide variety of synthetic polymeric materials which are susceptible to degradation upon exposure to heat and/ or radiation including both visible and ultraviolet light. Examples of such polymeric materials include homopolymers and co-polymers of alpha-olefins such as polyethylene, polypropylene, polybutene, poly-3-methylbutene and ethylene-propylene copolymers, ethylene-vinyl acetate copolymers, polystyrene, copolymers of styrene with other ethylenically-unsaturated monomers such as maleic anhydride, butadiene and acrylonitrile, polyvinyl acetate, acrylonitrile-butadiene-styrene polymers, polymethacrylate polymers, polyvinyl formal, polyvinyl butyral, polyamides such as polycaprolactam (nylon 6), polycarbonates, unsaturated polyesters and polyvinylidene chloride. The preferred stabilized compositions of our invention comprise homo-polymers and copolymers of alpha-olefins of 2 to 4 carbon atoms, especially polypropylene, containing a stabilizing amount of one or more of the compounds of formula (I).

The polymer may also be any thermoplastic resin known in the art, such as polyesters, polyurethanes, polyalkylene terephthalates, polysulfones, polyimides, polyphenylene ethers, styrenic polymers, polycarbonates, acrylic polymers, polyamides, polyacetals, halide containing polymers and polyolefin homopolymers and copolymers. Mixtures of different polymers, such as polyphenylene ether/ styrenic resin blends, polyvinyl chloride/ABS or other impact modified polymers, such as methacrylonitrile and alphamethylstyrene containing ABS, and polyester/ ABS or polycarbonate/ABS and polyester plus some other impact modifier may also be used. Such polymers are available commercially or may be made by means well known in the art. However, the phosphites of the invention are particularly useful in thermoplastic polymers, such as polyolefins, polycarbonates, polyesters, polyphenylene ethers and styrenic polymers, due to the extreme temperatures at which thermoplastic polymers are often processed and/ or used.

Polymers of monoolefins and diolefins, for example polypropylene, polyisobutylene, polybutene-1, polymethylpentene-1, polyisoprene or polybutadiene, as well as polymers of cycloolefins, for instance of cyclopentene or norbomene, polyethylene (which optionally can be crosslinked), for example high density polyethylene (HDPE), low density polyethylene (LDPE) and linear low density polyethylene (LLDPE) may be used. Mixtures of these polymers, for example, mixtures of polypropylene with polyisobutylene, polypropylene with polyethylene (for example PP/HDPE, PP/LDPE) and mixtures of different types of polyethylene (for example LDPE/ HDPE), may also be used. Also useful are copolymers of monoolefins and diolefines with each other or with other vinyl monomers, such as, for example, ethylene/ propylene, LLDPE and its mixtures with LDPE, propylene/butene-1, ethylene/hexene, ethylene/ethylpentene, ethylene/heptene, ethylene/octene, propylene/isobutylene, ethylene/butane-1, propylene/butadiene, isobutylene, isoprene, ethylene/alkyl acrylates, ethylene/alkyl methacrylates, ethylene/ vinyl acetate (EVA) or ethylene/ acrylic acid copolymers (EAA) and their salts (ionomers) and terpolymers of ethylene with propylene and a diene, such as hexadiene, dicyclopentadiene or ethylidene-norbomene; as well as mixtures of such copolymers and their mixtures with polymers mentioned above, for example polypropylene/ethylene propylene-copolymers, LDPE/EVA, LDPE/EAA, LLDPE/EVA and LLDPE/EAA.

Olefin polymers may be produced by polymerization of olefins in the presence of Ziegler-Natta catalysts optionally on supports such as but not limited to MgCl₂, chromium salts and complexes thereof, optionally supported on Silica or other materials. They may also be produced utilizing catalysts based on cyclopentadiene complexes of metals typically complexes of Ti and Zr. Useful polyolefins may be made by processes such as using "Reactor Granule Technology" as disclosed in P. Galli and J. C. Halock, The Reactor Granule-A Unique Technology for the Production of a New Generation of Polymer Blends, Society of Plastics Engineers, Polyolefin III International Conference Feb. 24-27,1991 and as disclosed in Pedrazzeth et al., U.S. Pat. No. 4,708,979, both of which are disclosed herein by reference. Particle formation may be achieved by support Ziegler-Natta Catalyst systems. Suitable commercial processes are known by the trademarks: Spheripol, Addipol, and Spherilene.

Thermoplastic polymers may also include styrenic polymers, such as polystyrene, poly-(p-methylstyrene), poly-(alpha -methylstyrene), copolymers of styrene or alpha-methylstyrene with dienes or acrylic derivatives, such as, for example, styrene/butadiene, styrene/acrylonitrile, styrene/alkyl methacrylate, styrene/ maleic anhydride, styrene/butadiene/ethylacrylate/styrene/acrylonit rile/methylacrylate, mixtures of high impact strength from styrene copolymers and another polymer, such as, for example, from a polyacrylate, a diene polymer or an ethylene/propylene/diene terpolymer; and block copolymers of styrene, such as, for example, styrene/ butadiene/ styrene, styrene/ isoprene/ styrene, styrene/ethylene/butylene/styrene or styrene/ethylene/propylene styrene. Styrenic polymers may additionally or alternatively include graft copolymers of styrene or alphamethylstyrene such as, for example, styrene on polybutadiene, styrene on polybutadiene-styrene or polybutadiene-acrylonitrile; styrene and acrylonitrile (or methacrylonitrile) on polybutadiene and copolymers thereof; styrene and maleic anhydride or maleimide on polybutadiene; styrene, acrylonitrile and maleic anhydride or maleimide on polybutadiene; styrene, acrylonitrile and methyl methacrylate on polybutadiene, styrene and alkyl acrylates or methacrylates on polybutadiene, styrene and acrylonitrile on ethylene/propylene/diene terpolymers, styrene and acrylonitrile on polyacrylates or polymethacrylates, styrene and acrylonitrile on acrylate/ butadiene copolymers, as well as mixtures of with the styrenic copolymers indicated above.

Nitrile polymers are also useful in the polymer composition of the invention. These include homopolymers and copolymers of acrylonitrile and its analogs, such as polymethacrylonitrile, polyacrylonitrile, acrylonitrile/butadiene polymers, acrylonitrile/alkyl acrylate polymers, acrylonitrile/alkyl methacrylate/butadiene polymers, and various ABS compositions as referred to above in regard to styrenics.

Polymers based on acrylic acids, such as acrylic acid, methacrylic acid, methyl methacrylic acid and ethacrylic acid and esters thereof may also be used. Such polymers include polymethylmethacrylate, and ABS-type graft copolymers wherein all or part of the acrylonitrile-type monomer has been replaced by an acrylic acid ester or an acrylic acid amide. Polymers including other acrylic-type monomers, such as acrolein, methacrolein, acrylamide and methacrylamide may also be used.

Halogen-containing polymers may also be useful. These include resins such as polychloroprene, epichlorohydrin homo-and copolymers, polyvinyl chloride, polyvinyl bromide, polyvinyl fluoride, polyvinylidene chloride, chlorinated polyethylene, chlorinated polypropylene, florinated polyvinylidene, brominated polyethylene, chlorinated rubber, vinyl chloride-vinylacetate copolymers, vinyl chloride-ethylene copolymer, vinyl chloride-propylene copolymer, vinyl chloride-styrene copolymer, vinyl chloride-isobutylene copolymer, vinyl chloride-vinylidene chloride copolymer, vinyl chloride-styrene-maleic anhydride copolymer, vinyl chloride-styrene-acrylonitrile copolymer, vinyl chloride-butadiene copolymer, vinyl chloride isoprene copolymer, vinyl chloride-chlorinated propylene copolymer, vinyl chloride-vinylidene chloride-vinyl acetate copolymer, vinyl chloride-acrylic acid ester copolymers, vinyl chloride-maleic acid ester copolymers, vinyl chloride-methacrylic acid ester copolymers, vinyl chloride-acrylonitrile copolymer and internally plasticized polyvinyl chloride.

Other useful thermoplastic polymers include homopolymers and copolymers of cyclic ethers, such as polyalkylene glycols, polyethylene oxide, polypropylene oxide or copolymers thereof with bis-glycidyl ethers; polyacetals, such as polyoxymethylene and those polyoxymethylene which contain ethylene oxide as a comonomer; polyacetals modified with thermoplastic polyurethanes, acrylates or methacrylonitrile containing ABS; polyphenylene oxides and sulfides, and mixtures of polyphenylene oxides with polystyrene or polyamides; polycarbonates and polyester-carbonates; polysulfones, polyethersulfones and polyetherketones; and polyesters which are derived from dicarboxylic acids and diols and/ or from hydroxycarboxylic acids or the corresponding lactones, such as polyethylene terephthalate, polybutylene terephthalate, poly-1,4-dimethylol-cyclohexane terephthalate, poly-2(2,2,4(4-hydroxyphenyl)propane) terephthalate and polyhydroxybenzoates as well as block-copolyetheresters derived from polyethers having hydroxyl end groups.

Polyamides and copolyamides which are derived from diamines and dicarboxylic acids and/ or from aminocarboxylic acids or the corresponding lactams, such as polyamide, 4,polyamide 6, polyamide 6/6, 6/10, 6/9, 6/12 and 4/ 6, polyamide 11, polyamide 12, aromatic polyamides obtained by condensation of m-xylene, diamine and adipic acid; polyamides prepared from hexamethylene diamine and isophthalic or/ and terephthalic acid and optionally an elastomer as modifier, for example poly-2,4,4-trimethylhexamethylene terephthalamide or poly-m-phenylene isophthalamide may be useful. Further copolymers of the aforementioned polyamides with polyolefins, olefin copolymers, ionomers or chemically bonded or grafted elastomers; or with polyethers, such as for instance, with polyethylene glycol, polypropylene glycol or polytetramethylene glycols and polyamides or copolyamides modified with EPDM or ABS may be used.

Polyolefin, polyalkylene terephthalate, polyphenylene ether and styrenic resins, and mixtures thereof are more preferred, with polyethylene, polypropylene, polyethylene terephthalate, polyphenylene ether homopolymers and copolymers, polystyrene, high impact polystyrene, polycarbonates and ABS-type graft copolymers and mixtures thereof being particularly preferred.

The resulting stabilized polymer compositions of the invention may optionally also contain various conventional additives, such as the following:
1. Antioxidants
   1.1. Alkylated monophenols, for example: 2,6-di-tertbutyl-4-methylphenol, 2-tert-butyl-4,6-dimethylphenol, 2,6-di-tert-butyl-4-ethylphenol, 2,6-di-tert-butyl-4-n-butylphenol, 2,6-di-tert-butyl-4-isobutylphenol, 2,6-dicyclopentyl-4-methylphenol, 2-(alphamethylcyclohexyl)-4,6-dimethylphenol, 2,6-dioctadecyl-4-methylphenol, 2,4,6,-tricyclohexyphenol, 2,6-di-tert-butyl-4-methoxymethylphenol, alpha-tocopherol and derivatives of alpha-tocopherol.
   1.2. Alkylated hydroquinones, for example, 2,6-di-tert-butyl-4-methoxyphenol, 2,5-di-tert-butyl-hydroquinone, 2,5-di-tert-amylhydroquinone, 2,6-diphenyl-4-octadecyloxyphenol.
   1.3. Hydroxylated thiodiphenyl others, for example, 2,2'-thio-bis-(6-tert-butyl-4-methylphenol), 2,2'-thio-bis-(4-octylphenol), 4,4'-thio-bis-(6-tert-butyl-3-methylphenol), 4,4'-thio-bis-(6-tert-butyl-2-methylphenol).
   1.4. Alkylidene-bisphenols, for example, 2,2'-methylene-bis-(6-tert-butyl-4-methylphenol), 2,2'-methylene-bis-(6-tert-butyl-4-ethylphenol), 2,2'-methylene-bis-(4-methyl-6-(alpha-methylcyclohexyl(phenol), 2,2'-methylene-bis-(4-methyl-6-cyclohexylphenol), 2,2'-methylene-bis-(6-nonyl-4-methylphenol), 2,2'-methylene-bis-(6-nonyl-4-methylphenol), 2,2'-methylene-bis-(6-(alpha-methylbenzyl)-4-nonylphenol), 2,2'-methylene-bis-(6-(alpha,alpha-dimethylbenzyl)-4-nonyl-phenol). 2,2'-methylene-bis-(4,6-di-tert-butylphenol), 2,2'-ethylidene-bis-(6-tert-butyl-4-isobutylphenol), 4,4'-methylene-bis-(2,6-di-tert-butylphenol), 4,4'-methylene-bis-(6-tert-butyl-2-methylphenol), 1,1-bis-(5-tert-butyl-4-hydroxy-2-methylphenol)butane, 2,6-di-(3-tert-butyl-5-methyl-2-hydroxybenzyl)-4-methylphenol, 1,1,3-tris-(5-tert-butyl-4-hydroxy-2-methylphenyl)butane, 1,1-bis-(5-tert-butyl-4-hydroxy-2-methylphenyl)-3-dodecyl-mercaptobutane, ethyleneglycol-bis-(3,3,-bis-(3'-tert-butyl-4'-hydroxyphenyl)-butyrate)-di-(3-tert-butyl-4-hydroxy-5-methylphenyl)-dicyclopentadiene, di-(2-(3'-tert-butyl-2'-hydroxy-5'-methyl-benzyl)-6-tert-butyl-4-methylphenyl) terephthalate.
   1.5. Benzyl compounds, for example, 1,3,5-tris-(3,5-di-tert-butyl-4-hydroxybenzyl)-2,4,6-trimethylbenzene, bis-(3,5-di-tert-butyl-4-hydroxybenzyl)sulfide, isooctyl 3,5-di-tert-butyl-4-hydroxybenzyl-mercapto-acetate, bis-(4-tert-butyl-3-hydroxy-2,6-dimethylbenzyl)dithiolterephthalate. 1,3,5-tris-(3,5-di-tert-butyl-4-hydroxybenzyl)isocyanurate. 1,3,5-tris-(4-tert-butyl-3-hydroxy-2,6-dimethylbenzyl)isocyanurate, dioctadecyl 3,5-di-tert-butyl-4-hydroxybenzylphosphonate, calcium salt of monoethyl 3,5-di-tert-butyl-4-hydroxybenzylphosphonate, 1,3,5-tris-(3,5-dicyclohexyl-4-hydroxybenzyl)isocyanurate.
   1.6. Acylaminophenols, for example, 4-hydroxy-Iauric acid anilide, 4-hydroxy-stearic acid amilide, 2,4-bis-octylmercapto-6-(3,5-tert-butyl-4-hydroxyanilino)-s-triazine, octyl-N-(3,5-di-tert-butyl-4-hydroxyphenyl)-carbamate.
   1.7. Esters of beta-(3,5-di-tert-butyl-4-hydroxyphenol)-propionic acid with nonohydric or polyhydric alcohols, for example, methanol, diethyleneglycol, octadecanol, triethyleneglycol, 1,6-hexanediol, penta-ervthritol, neopentylglycol, tris-hydroxyethyl isocyanurate, thiodiethyleneglycol, di-hydroxyethyl oxalic acid diamide.
   1.8. Esters of beta-(5-tert-butyl-4-hydroxy-3-methylphenyl)-propionic acid with monohydric or polyhydric alcohols, for example, methanol, diethyleneglycol, octadecanol, triethyleneglycol, 1,6-hexanediol, pentaerythritol, neopentylglycol, tris-hydroxyethyl isocyanurate, thiodiethyleneglycol, dihydroxyethyl oxalic acid diamide.
   1.9. Esters of beta-(5-tert-butyl-4-hydroxy-3-methylphenyl) propionic acid with mono-or polyhydric alcohols, e.g., with methanol, diethylene glycol, octadecanol, triethylene glycol, 1,6-hexanediol, pentaerythritol, neopentyl glycol, tris(hydroxyethyl) isocyanurate, thiodiethylene glycol, N,N-bis(hydroxyethyl) oxalic acid diamide.
   1.10. Amides of beta-(3,5-di-tert-butyl-4-hydroxyphenol)-propionic acid for example, N,N'-di-(3,5-di-tert-butyl-4-hydroxyphenylpropionyl)-hexamethylene-diamine, N,N'-di-(3,5-di-tert-butyl-4-hydroxyphenylpropionyl)trimethylenediamine, N,N'-di-(3,5-di-tert-butyl-4-hydroxyphenylpropionyl)-hydrazine.

A preferred embodiment has as the phenolic antioxidant, at least one of the following: tetrakis(methylene-3,5-di-tert-butyl-4-hydroxyphenyl)propionate)methane, neopentanetetrayl tetrakis(3,5-di-tert-butyl-4-hydroxyhydrocinnamate), n-octadecyl 3,5-di-tert-butyl-4-hydroxyhydrocinnamate, 1,3,5-trimethyl-2,4,6-tris(3,5-di-tert-butyl-4-hydroxybenzyl)benzene, 1,3,5-tris(3,5-di-tert-butyl-4-hydroxybenzyl)isocyanurate, 2,6-di-tert-butyl-p-cresol, 2,2'-ethylidene-bis(4,6-di-tert-butylphenol).
2. UV absorbers and light stabilizers.
   2.1. 2-(2'-hydroxyphenyl)-benzotriazoles, for example, the 5'-methyl, 3',5'-di-tert-butyl, 5'-tert-butyl, 5'-(1,1,3,3-tetramethylbutyl)-, 5-chloro-3',5'-di-tert-butyl-, 5-chloro-3'-tert-butyl-5'-methyl-, 3'-sec-butyl-5'-tert-butyl-4'-octoxy-, 3',5'-di-tert-amyl-, 3',5'-bis-(alpha,alpha-dimethylbenzyl)- derivatives.
   2.2. 2-Hydroxy-benzophenones, for example, the 4-hydroxy-4-methoxy-, 4-octoxy, 4-decyloxy-, 4-dodecyloxy-, 4-benzyloxy, 4,2',4'-trihydroxy- and 2'hydroxy-4,4'-dimethoxy derivatives.
   2.3. Esters of substituted and unsubstituted benzoic acids for example, phenyl salicylate, 4-tert-butylphenyl-salicilate, octylphenyl salicylate, dibenzoylresorcinol, bis-(4-tert-butylbenzoyl)-resorcinol, benzoylresorcinol, 2,4-di-tert-butyl-phenyl-3,5-di-tert-butyl-4-hydroxybenzoate and hexadecyl-3,5-di-tert-butyl-4-hydroxybenzoate.
   2.4. Acrylates, for example, alpha-cyano-beta, beta-diphenylacrylic acid-ethyl ester or isooctyl ester, alpha-carbomethoxy-cinnamic acid methyl ester, alpha-cyano-beta-methyl-p-methoxy-cinnamic acid methyl ester or butyl ester, alpha-carbomethoxy-p-methoxy-cinnamic acid methyl ester, N-(beta-carbomethoxy-beta-cyano-vinyl)-2-methyl-indoline.
   2.5. Nickel compounds, for example, nickel complexes of 2,2'-thio-bis(4-(1,1,1,3-tetramethylbutyl)-phenol), such as the 1:1 or 1:2 complex, optionally with additional ligands such as n-butylamine, triethanolamine or N-cyclohexyldiethanolamine, nickel dibutyldithiocarbamate, nickel salts of 4-hydroxy-3,5-di-tert-butylbenzylphosphonic acid monoalkyl esters, such as of the methyl, ethyl, or butyl ester, nickel complexes of ketoximes such as of 2-hydroxy-4-methyl-penyl undecyl ketoxime, nickel complexes of 1-phenyl-4-lauroyl-5-hydroxy-pyrazole, optionally with additional ligands.
   2.6. Sterically hindered amines, for example bis(2,2,6,6-tetramethylpiperidyl)-sebacate, bis-(1,2,2,6,6-pentamethylpiperidyl)-sebacate, n-butyl-3,5-di-tert-butyl-4-hydroxybenzyl malonic acid bis(1,2,2,6,6,-pentamethylpiperidyl)ester, condensation product of 1-hydroxyethyl-2,2,6,6-tetramethyl-4-hydroxy-piperidine and succinic acid, condensation product of N,N'-(2,2,6,6-tetramethylpiperidyl)-hexamethylendiamine and 4-tert-octylamino-2,6-dichloro-1,3,5-s-triazine, tris-(2,2,6,6-tetramethylpiperidyl)-nitrilotriacetate, tetrakis-(2,2,6,6-tetramethyl-4-piperidyl)-1,2,3,4-butane-tetra-carbonic acid, 1,1'-(1,2-ethanediyl)-bis-(3,3,5,5-tetramethylpiperazinane). Such amines include hydroxylamines derived from hindered amines, such as di(1-hydroxy-2,2,6,6-tetramethylpiperidin-4-yl)sebacate; 1-hydroxy 2,2,6,6-tetramethyl-4-benzoxypiperidine; 1-hydroxy-2,2,6,6-tetramethyl-4-(3,5-di-tert-butyl-4-hydroxy hydrocinnamoyloxy)-piperdine; and N-(1-hydroxy-2,2,6,6-tetramethyl-piperidin-4-71)-epsilon-caprolactam. Amine oxides of hindered amine stabilizers are also included in the present invention.
   2.7. Oxalic acid diamides, for examples, 4,4'-dioctyloxy-oxanilide, 2,2'-di-octyloxy-5',5'-di-tert-butyloxanilide, 2,2'-di-dodecyloxy-5',5'di-tert-butyl-oxanilide, 2-ethoxy-2'-ethyloxanilide, N,N'-bis(3-dimethylaminopropyl)-oxaiamide, 2-ethoxy-5-tert-butyl-2'-ethyloxanilide and its mixture with 2-ethoxy-2'ethyl-5,4-di-tert-butyloxanilide and mixtures of ortho-and para-methoxy as well as of o-and p-ethoxy-disubstituted oxanilides.
3. Metal deactivators, for example, N,N'-diphenyloxalic acid diamide, N-salicylal-N'-salicyloylhydrazine, N,N'-bis-salicyloylhydrazine, N,N'-bis-(3,5-di-tert-butyl-4-hydrophenylpropionyl)-hydrazine, salicyloylamino-1,2,4-triazole, bis-benzylidenoxalic acid dihydrazide.
4. Phosphites and phosphonites, for example, for example, triphenyl phosphite, diphenylalkyl phosphites, phenyldialkyl phosphites, tri-(nonylphenyl) phosphite, trilauryl phosphite, trioctadecyl phosphite, di(isodecyloxy)-2,4,8,10-tetraoxa-3,9-diphospha-[5.5]-undecane, and tri-(4-hydroxy-3,5-di-tert.-butylphenyl) phosphite, and/or similar phosphonites. The organic phosphorus compounds of particular interest include those selected from the group consisting of tris(2,4-di-tert-butylphenyl) phosphite, 3,9-di(2,4-di-tert-butylphenoxy)-2,4,8,10-tetraoxa-3,9-diphospha[5.5]undecane, tris(p-nonylphenyl) phosphite, 3,9-distearyloxy-2,4,8,10-tetraoxa-3,9-diphospha[5.5]undecane, dilauryl phosphite, 3,9-di[2,6-di-tert-butyl-4-(2-(n-octadecyloxycarbonyl)ethyl)-phenoxy]-2,-4,8,10-tetraoxa-3,9-diphospha[5.5]undecane and tetrakis(2,- 4-di-tert-butylphenyl) 4,4'-bis(diphenylene)phosphonite, distearyl pentaerythritol diphosphite, diisodecyl pentaerythritol diphosphite, 2,4,6-tri-tert-butylphenyl-2-butyl-2-ethyl-1,3-propanediol phosphite, bis(2,4-di-tert-butylphenyl)pentaerythritol diphosphite, tristearyl sorbitol triphosphite, [[2,4,8,10-tetrakis (1,1-dimethylethyl)dibenzo [d,f][1,3,2dioxaphosphepin-6-yl]oxy]-N,N-bis-[2-[[2,4,8,10-tetrakis1,1-dimethylethyl)dibenzo[d,f][1,3,2 dioxaphosphenpin-6-yl]oxy]-ethyl]ethanamine and as disclosed in U.S. Pat. No. 4,318,845 (commercially available as IRGAFOS 12), bis[2-methyl-4,6-bis(1,1-dimethylethyl)phenol]phosphorous acid ethyl ester (commercially available as IRGAFOS 38), and tetrakis(2,4-di-tert-butylphenyl)4,4'-biphenylene diphosphonite. Tris(2,4-di-tert-butylphenyl) phosphite, 2,4,6-tri-tert-butylphenyl-2-butyl-2-ethyl-1,3-propanediol phosphite, bis(2,4-di-tert-butylphenyl)pentaerythritol diphosphite are especially preferred, as well as mixtures of phosphites containing at least one of the foregoing phosphites.
5. Hydroxylamines, for example, N,N-dibenzylhydroxylamine, N,N-diethylhydroxylamine, N,N-dioctylhydroxylamine, N,N-dilaurylhydroxylamine, N,N-ditetradecylhydroxylamine, N,N-dihexadecylhydroxylamine, N,N-dioctadecylhydroxylamine, N-hexadecyl-N-octadecylhydroxylamine, N-heptadecyl-N-octadecylhydroxylamine, N,N-dioctylhydroxylamine, N,N-di-tert-butylhydroxylamine, N-cyclohexylhydroxylamine, N-cyclododecylhydroxylamine, N,N-dicyclohexylhydroxylamine, N,N-dibenzylhydroxylamine, N,N-didecylhydroxylamine, N,N-di(coco alkyl)hydroxylamine, N,N-di(C₂₀-C₂₂ alkyl)hydroxylamine, and N,N-dialkylhydroxylamine derived from hydrogenated tallow amine (i.e., N,N-di(tallow alkyl)hydroxylamine), as well as mixtures containing any of the foregoing. Other useful hydroxylamines are known in the art such as those in U.S. Pat. Nos. 3,644,278; 3,778,464; and 4,590,231.
6. Tertiary amine oxides, for example, dioctyl methyl amine oxide, trioctyl amine oxide, didecyl methyl amine oxide, tridecyl amine oxide, di(coco alkyl) methyl amine oxide, tri(coco alkyl) amine oxide, di(tallow alkyl) methyl amine oxide, tri(tallow alkyl) amine oxide, tri(rape seed alkyl) amine oxide, di(rape seed alkyl) methyl amine oxide, tri(C₂₀-C₂₂) amine oxide, and di(C₂₀-C₂₂ alkyl) methyl amine oxide. Amine oxides of sterically hindered tertiary amines, as well as amine oxides containing at least one -O-, -S-, -SO-, -CO₂-, -CO-, -C=C-, or -CON- moieties are also useful. Amine oxides derived from hydrogenated and non-hydrogenated trialkyl amines, as well as mixtures thereof, are useful. Thermal decomposition and reaction products of tertiary amine oxides are further useful additives.
7. Nitrones, for example, n-benzyl-alpha-phenyl nitrone, N-ethyl-alpha-methyl nitrone, N-octyl-alpha-heptyl nitrone, N-lauryl-alpha-undecyl nitrone, N-tetradecyl-alpha-tridecyl nitrone, N-hexadecyl-alpha-penta-decyl nitrone, n-octadecyl-alpha-heptadecylnitrone, N-hexadecyl-alpha-heptadecyl nitrone, N-octadecyl-alpha-pentadecy nitrone, N-heptadecyl-alpha-heptadecy nitrone, N-octadecyl-alpha-hexadecyl nitrone, nitrone derived from N,N-dialkylhydroxylamine derived from hydrogenated tallow amine.
8. 3-Arylbenzofuranones, for example, 3-arylbenzofuranones of the formula 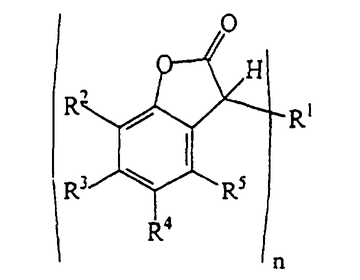 wherein, when n is 1, R¹ is an unsubstituted or substituted carbocyclic or heterocyclic aromatic ring system,
   wherein, when n is 2, R¹ is unsubstituted or C₁-C₄alkyl- or hydroxy-substituted phenylene or naphthylene; or is -R⁶-X-R⁷-, and
   wherein R², R³, R⁴ and R⁵ are each independently of one another hydrogen, chloro, hydroxy, C₁-C₂₅alkyl, C₇-C₉-phenylalkyl, unsubstituted or C₁-C₄alkyl-substituted phenyl, unsubstituted or C₁-C₄alkyl-substituted C₅-C₈cycloalkyl; C1-C₁₈alkoxy, C₁-C₁₈alkylthio, C₁-C₄alkylamino, di-(C₁-C₄alkyl)amino, C1-C₂₅alkanoyloxy, C₁-C₂₅alkanoylamino, C₃-C₂₅alkenoyloxy, C₃-C₂₅alkanoyloxy which is interrupted by oxygen, sulfur or > N-R⁸; C₆-C₉cycloalkylcarbonyloxy, benzoyloxy or C₁-C₁₂alkyl-substituted benzoyloxy; or each pair of substituents R² and R³ or R³ and R⁴ or R⁴ and R⁵, together with the linking carbon atoms, forms a benzene ring; R⁴ is additionally -(CH₂)ₚ-COR⁹ or -(CH₂)_{q}OH, or, if R³ and R⁵ are hydrogen, R⁴ is additionally a radical of formula 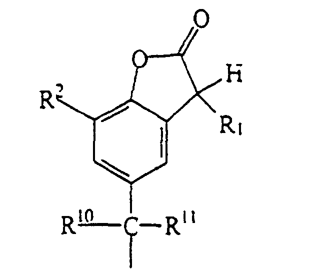 wherein R¹ is as defined above when n = 1, R⁶ and R⁷ are each independently of the other unsubstituted or C₁-C₄alkyl-substituted phenylene or naphthylene, R⁸ is hydrogen or C₁-C₈alkyl, R⁹ is hydroxy, (-O⁻ 1/r M^{r+}); C₁-C₁₈ alkoxy or 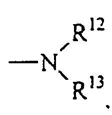 R¹⁰ and R¹¹ are each independently of the other hydrogen, CF₃, C₁-C₁₂alkyl or phenyl, or R¹⁰ and R¹¹, together with the linking carbon atom, form a C₅-C₈cycloalkylidene ring which is unsubstituted or substituted by 1 to 3 C₁-C₄alkyl groups, R¹⁴ is hydrogen or C₁-C₁₈alkyl, M is a metal cation of valency r, X is a direct bond, oxygen, sulfur or NR¹⁴, n is 1 or 2, p is 0,1 or 2, q is 1, 2, 3, 4, 5 or 6, and r is 1, 2 or 3, which process comprises reacting a compound of formula 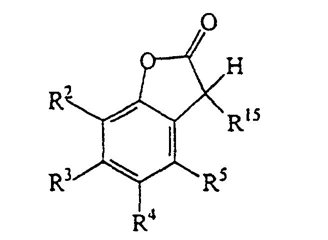 wherein R¹⁵ is halogen or -OR'¹⁵, R'¹⁵ is hydrogen, C₁-C₂₅alkanoyl, C₃-C₂₅alkenoyl, C₃-C₂₅alkanoyl which is interrupted by oxygen, sulfur or 〉N―R⁸; C₆-C₉cycloalkylcarbonyl, thenoyl, furoyl, benzoyl or C₁-C₁₂alkyl-substituted benzoyl; naphthoyl or C₁-C₁₂alkyl-substituted naphthoyl; C₁-C₂₅alkanesulfonyl, fluoro-substituted C₁-C₂₅alkanesulfonyl; phenylsulfonyl or C₁-C₁₂alkyl-substituted phenylsulfonyl; 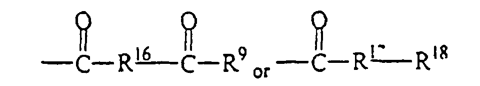 R¹⁶ is a direct bond, C₁-C₁₈alkylene, C₂-C₁₈alkylene which is interrupted by oxygen, sulfur or 〉N-R⁸ ; C₂-C₁₈alkenylene, C₂-C₂₀alkylidene, C₇-C₂₀phenylalkylidene, C₅-C₈cycloalkylene, C₇-C₈bicycloalkylene, unsubstituted or C₁-C₄alkyl-substituted phenylene, 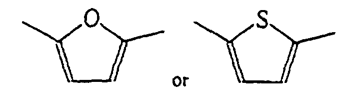 R¹⁷ is oxygen, -NH- or 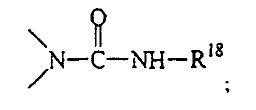 and R¹⁸ is C₁-C₁₈alkyl or phenyl, with a compound of formula [H]ₙ-R¹.
   Useful 3-arylbenzofuranones are known compounds and include those found in U.S. Patent Nos. 4,325,863; 4,338,244, 5,175,312, and 5,607,624.
   An especially preferred 3-arylbenzofuranone for use in the present invention is 5,7-di-tert-butyl-3-(3,4-di-methylphenyl)-3H-benzofuran-2-one.
9. Peroxide scavengers, for example, esters of beta-thiodipropionic acid, for example the lauryl, stearyl, myristyl or tridecyl esters, mercaptobenzimidazole or the zinc salt of 2-mercaptobenzimidazole, zinc-dibutyldithiocarbamate, dioctadecyldisulfide, pentaerythritoltetrakis-(beta-dodecylmercapto)-propionate.
10. Polyamide stabilizers, for example copper salts in combination with iodides and/ or phosphorus compounds and salts of divalent manganese.
11. Basic co-stabilizers, for example, melamine, polyvinylpyrrolidone, dicyandiamide, triallyl cyanurate, DHT-4A, hydrotalcites, urea derivatives, hydrazine derivatives, amines, polyamides, polyurethanes, alkali metal salts and alkaline earth metal salts of higher fatty acids, for example, Ca stearate, calcium stearoyl lactate, calcium lactate, Zn stearate, Mg stearate, Na ricinoleate and K palpitate, antimony pyrocatecholate or zinc pyrocatecholate.
12. Nucleating agents, for example, sodium benzoate, sodium alkyl benzoates, sodium salts of bis(alkylphenyl)phosphates, 4-tert-butylbenzoic acid, adipic acid, diphenylacetic acid, sodium salt of methylene bis-2,4-dibutylphenyl, cyclic phosphate esters, sorbitol tris-benzaldehyde acetal, and sodium salt of bis(2,4-di-t-butylphenyl) phosphate or Na salt of ethylidene bis(2,4-di-t-butyl phenyl)phosphate..
13. Clarifiers, for example, acetals prepared from benzaldehyde and sorbitol.
14. Fillers and reinforcing agents, for example, calcium carbonate, silicates, glass fibers, asbestos, talc, kaolin, mica, barium sulfate, metal oxides and hydroxides, carbon black and graphite.
15. The present invention may also be used in conjunction with aminoxy propanoate derivatives such as methyl-3-(N,N-dibenzylaminoxy)propanoate; ethyl-3-(N,N-dibenzylaminoxy)propanonoate; 1,6-hexamethylene-bis(3-N,N-dibenzylaminoxy)propionate); methyl-(2-(methyl)-3(N,N-dibenzylaminoxy)propanoate); octadecyl-3-(N,N-dibenzylaminoxy)propanoic acid; tetrakis (N,N-dibenzylaminoxy)ethyl carbonyl oxymethyl)methane; octadecyl-3-(N,N-diethylaminoxy)-propanoate; 3-(N,N-dibenzylaminoxy)propanoic acid potassium salt; and 1,6-hexamethylene bis(3-(N-allyl-N-dodecyl aminoxy)propanoate).
16. Other additives, for example, plasticizers, lubricants, emulsifiers, pigments, optical brighteners, flameproofing agents, anti-static agents, blowing agents and thiosynergists such as dilaurythiodipropionate or distearylthiodipropionate.

In one embodiment, the bis-phosphite compounds of the present invention are used in combination with an amine compound, preferably a polyamine. This combination utilizing an amine compound improves the hydrolytic stability of the bis-phosphite compounds. When a bis-phosphite compound is isolated as a solid, the present invention contemplates that it may be utilized in solid amorphous form. The amorphous phosphite composition is formed by rapid cooling of melt of the phosphite. Such melt may be a mixture of the bis-phosphite compound and polyamine which is rapidly cooled to form a solid amorphous phosphite composition. The amorphous nature of composition enhances the hydrolytic stability of the solid composition compared to crystalline composition containing the same constituents, such compositions may additionally contain respective amounts of an amine preferably an aliphatic polyamine.

The amorphous composition is prepared by melting the crystalline bis-phosphite compound, or a blend of the crystalline bis-phosphite compound and an amine or other desired ingredients, to form a melt blend. The resulting melt blend is cooled to form an amorphous solid bis-phosphite compound composition. The process may also involve storing the bis-phosphite compound for a period in excess of 10 days (possibly in humid conditions (>60% relative humidity)) at ambient temperature, and then compounding the bis-phosphite compound composition with a thermoplastic polymer such as a polyolefin, for example polypropylene for thermal oxidative stability thereof.

The amorphous stabilizer composition of the present invention preferably comprises at least 50 percent by weight of the bis-phosphite compound based on the total weight of the stabilizer composition, more preferably comprises from 80 percent by weight to 99.9 percent by weight of the bis-phosphite compound based on the total weight of the stabilizer composition, more preferably from 90 to 99.8 percent by weight thereof, more preferably from 95 to 99.5 percent by weight thereof, and most preferably from 97 to 99 percent by weight thereof.

The amine is preferably present at a level of from 0.1 to 10 percent by weight based on the total weight of the stabilizer composition, more preferably from 0.2 to 10 percent by weight thereof, more preferably present at a level of from 0.6 to 5 percent by weight thereof, and most preferably from 1 to 3 percent by weight thereof. Such stabilizer amine compositions are preferably in the form of amorphous (non-crystalline) particles, such as powders and pellets.

The preferred amine additives are polyamines, and more preferably aliphatic polyamines. The aliphatic polyamine preferably has a boiling point of greater than 175°C, more preferably greater than 190°C, and most preferably greater than 200°C. The aliphatic polyamine may contain primary, secondary or tertiary amine groups. Preferably the amine groups are primary amine groups. The polyamine may contain 2, 3 or more amine groups, and in other words may be a diamine, triamine or greater polyamine amine. The preferred polyamines are aliphatic primary diamines of the formula 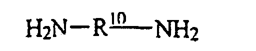 wherein R¹⁰ is selected from C₆ to C₁₀ divalent alkyl groups, and more preferably the diamine is selected from 1,6 diaminohexane and 1,10-diaminodecane. Suitable aliphatic secondary diamines may be represented by the general formula: 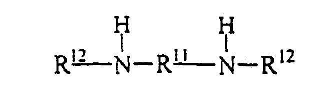 wherein R¹¹ is selected from C₁ to C₁₀ divalent alkyl groups and R¹² is selected from C₁ to C₃₀ monovalent alkyl group. Suitable aliphatic tertiary diamines may be represented by the general formula 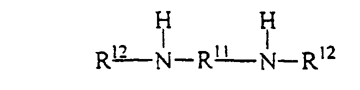 wherein R¹¹ and R¹² are defined as above. Most preferably the polyamine is an aliphatic primary diamine. The amines may also be monoamines and hydroxylamines such as triisopropanolamine, and R¹²NH₂, (R¹²)₂NH, (R¹²)₃N, (R¹²)₂NOH.

The concentration of the bis-phosphite compounds in the polymeric material which will effectively inhibit polymer degradation can vary considerably depending on the particular polymer being stabilized and the end use for which the stabilized polymeric material is designed. Generally, concentration in the range of 0.001 to 5.0 weight percent may be used with concentrations of about 0.01 to 0.5 being most common. Polymeric particles may be coated with the present phosphites alone or in combination with other stabilizers for stabilization of the polymeric material. The bis-phosphite stabilizers provided by this invention typically will be used in combination with other conventional stabilizers such as phenolic antioxidants, phosphites, hydroxylamines, 3-arylbenzofuranones, polyvalent salts of organic acids, and thioethers. In addition, any of the aforementioned additives may be present.

Consistent with the invention, the bis-phosphite stabilizer may be incorporated into the polymeric materials any time prior to or during fabrication by any of a variety of means unknown in the art. For example, the stabilizer may be added directly to a melt of the polymer on a roll mill to distribute the phosphite compound uniformly throughout the polymer. Alternatively, the bis-phosphite compound may be dry-blended with a finely-divided form of the polymer such as pellets and then the dry mix can be mixed further in and extruded from an extruder.

It should be clear that the present invention encompasses the bis-phosphite compounds described herein as well as polymeric materials and articles of polymeric materials that contain the bis-phosphite compounds.

The utility of the bis-phosphite compounds as stabilizers for polymeric materials is further illustrated by the following examples.

### DETAILED DESCRIPTION OF PREFERRED EMBODIMENTS

In order to provide a general description of the preparation of the phosphites of the present invention, the following illustrative procedures are provided for a chlorophosphite and a bisphosphite. Other bisphosphites can be prepared following these general procedures by one of skill in the art without undue experimentation.

### Examples

### 1.0 Synthesis of Neopentyl Glycol Chlorophosphite

In a 500 ml 3-necked flask equipped with a reflux water condenser and an addition funnel was placed 104.15 g of neopentyl glycol and 300 ml of methylene chloride, and the solution was cooled to about 0-10°C by placing the flask in an ice/salt bath. Into the addition funnel was added 163.63 g of phosphorus trichloride and the phosphorus trichloride was added dropwise during about 6 hours into the reaction flask, maintaining the temperature below about 10°C, followed by allowing the reaction solution to warm up to about room temperature over about 2 hours. The mixture was left overnight stirring for another 14 hours. The methylene chloride was removed by distillation and product was vacuum distilled to give a pale yellow colored liquid at 80°C/16 mm to collect 160.85 g (95.43% yield) of pure colorless neopentyl glycol chlorophosphite.

### 1.1 Preparation of 2,2'-methylene bis(4,6-di-tert-butylphenylneopentylglycol) phosphite (Phos-2)

In a 500 ml. 3-necked flask fitted with a temperature probe, a condenser, and an addition funnel was placed 42.47 g of 2,2'-methylene-bis-(4,6-di-tert-butylphenol) and 111.26 g of tributylamine. The reaction mixture was stirred well with a magnetic stir bar and 33.71 g of neopentylglycol monochlorophosphite was placed in the addition funnel and added into the reaction mixture during about 5 minutes. The reaction flask was heated slowly to about 95-103°C and held for nearly for 4 hours. Reaction mixture was allowed to cool to about 35°C and no solids were formed. About 100 ml. of heptane was added into the reaction mixture, stirred, filtered out the precipitated salts and the heptane solubles were stripped off to dryness. The oily residue was purified by adding about 150 ml. of acetonitrile and slowly heated to dissolve completely. Upon cooling to room temperature the product obtained was filtered through a sintered glass funnel to isolate white colored product and dried to collect 53.00g (76.93 % yield) of the bisphosphite, m.p. 166-167.5°C. A sample crystallized from heptane as white crystalline platelets had m.p. 166-167.5°C.

### 1.2 Preparation of 2,2'-Bis(4,6-di-tert-butylphenylneopentylglycol phosphite) (Phos-3).

In a 500 ml. 3-necked flask fitted with a temperature probe, a condenser, and an addition funnel was placed 41.27 g of 2,2'-bis-(4,6-di-tert-butylphenol) and 111.00 g of tributylamine. Reaction mixture was stirred well with a magnetic stir bar and 33.71 g of neopentyl glycol chlorophosphite was added through an addition funnel into the reaction mixture during about 10 minutes. The reaction flask was heated slowly to about 95-100°C and held for nearly 5 hours. The reaction mixture was allowed to cool to about 35°C and white solids formed. About 100 ml. of isopropanol was added into the reaction mixture, stirred and filtered through a sintered glass funnel and washed with another portion of about 150 ml. of isopropanol. The isolated white colored product was dried at 70°C/∼1 mm weighed 5 3.63g ( 79.24 % yield) and had m.p. 189-191°C. A sample crystallized from acetonitrile as white crystalline platelets had m.p. 190-192°C.

### 1.3 Preparation of 2,2'-ethylidene-bis(4,6-di-tert-butylphenylneopentylglycolphosphite (Phos-5)

In a 500 ml. 3-necked flask fitted with a temperature probe, a condenser, and an addition funnel was placed 43.87 g Isonox-129 and 111.20 g of tributylamine. The reaction mixture was stirred well with a magnetic stir bar and 33.71 g of neopentylglycol monochlorophosphite was added through the addition funnel into the reaction mixture during about 5 minutes and reaction flask was heated slowly to about 118-120°C and held for nearly for 6 hours. Reaction mixture was allowed to cool to about 35°C and white solids were formed. About 100 ml. of isopropanol was added into the reaction mixture, stirred and filtered through a sintered glass funnel and washed with another portion of about 150 ml. of isopropanol. The isolated white colored product was dried at 70°C/∼1 mm weighed 57.0 (81% yield ). The dried product was further crystallized from about 1800 ml. of acetonitrile to recover 42.00 g. of pure product, m.p. 208-210.5°C.

### 2.0 Cyclohexane-1,1-dimethanol chlorophosphite derivative

Following the-procedure described for the preparation for neopentyl glycol chlorophosphite, from 108.69 g cyclohexane-1,1-dimethanol, 130.69 g phosphorus trichloride and 250 g methylene chloride was obtained 146.29 g (93.04 % yield ) of cyclohexane-1,1-dimethanol chlorophosphite as colorless liquid upon vacuum distillation at 114-116°C/3.5 mm.

### 2.1 Preparation of 2,2'-methylene-bis(4,6-di-tert-butylphenyl-cyclohexyl-1,1-bis-hydroxymethylphosphite) (Phos-4)

Following essentially the similar procedure described for the Phos-2, from 18.26 g of 2,2'-methylene-bis(4,6-di-tert-butylphenol), 79.7g of tributylamine and 17.94 g. of cyclohexane-1,1-dimethyl alcohol chlorophosphite was obtained 26.0 g (78.64 % yield) of bisphosphite product, m.p. 187-189°C, upon working up extracting in heptane followed by crystallization from acetonitrile solvent. A sample crystallized from heptane had m.p. 188-189°C.

### 3.0 2-Butyl-2-ethyl-1,3-propanediol chlorophosphite

Following the procedure described for the preparation for neopentyl glycol chlorophosphite, from 260.78 g 2-butyl-2-ethyl-1,3-propanediol, 223.47 g phosphorus trichloride and 500 g heptane was obtained 386.94 g (94.48 % yield) of 2-ethyl-2-butyl-1,3-propanediol chlorophosphite as colorless liquid upon vacuum distillation at 139-140°C/16 mm.

### 3.1 Preparation of 2,2'-ethylidene-bis(4,6-di-tert-butylphenyl-2-butyl-2-ethyl-1,3-propanediolphosphite) (Phos-6)

Following essentially the similar procedure described above for the compound Phos-2, using 43.87 g of Isonox-129, 110 g of tributyamine, and 44.93 g. of 2-ethyl-2-butyl-1,3-propanediol chlorophosphite reaction was carried out. About 200 ml. of heptane/toluene was added into the reaction mixture and filtered through a sintered funnel. Heptane/toluene was removed using a rotary evaporator to isolate 59.00 g (72.3 %) of white material consisting of possible two isomers which was redissolved in hot heptane and crystallized with heptane/ isooctane solvent to isolate 36.0 g of white product, m.p. 157-163°C. upon drying. The heptane/ isooctane soluble portions were rotary evaporated and redissolved in hot acetonitrile and allowed to crystallized. The formed crystals were isolated to afford 16.00 g of white solid, m.p. 108-120°C.

In order to further demonstrate part of the advantageous and unexpected properties obtained in compositions containing the bisphosphites of the present invention, various compositions were prepared by methods known in the art.
- PP: polypropylene resin, grade Profax 6501 available from Montel Co.
- Phenol: a commercially available sterically hindered phenol sold under the trademark IRGANOX 1010 from Ciba-Geigy.
- CaSt: calcium stearate
- Phos-1: 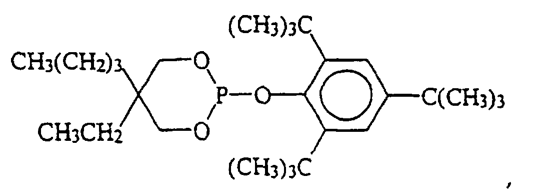 commercially available under the trademark ULTRANOX 641 from GE Specialty Chemicals.
- Phos-2: 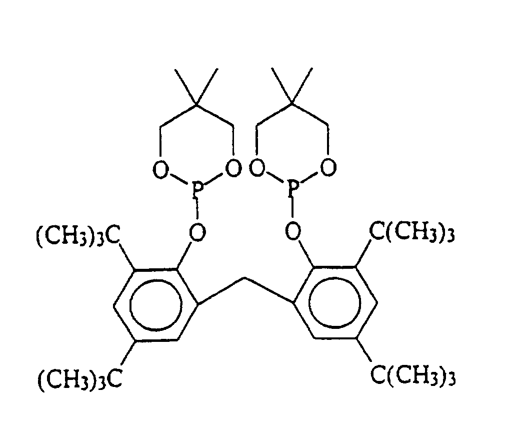
- Phos-3: 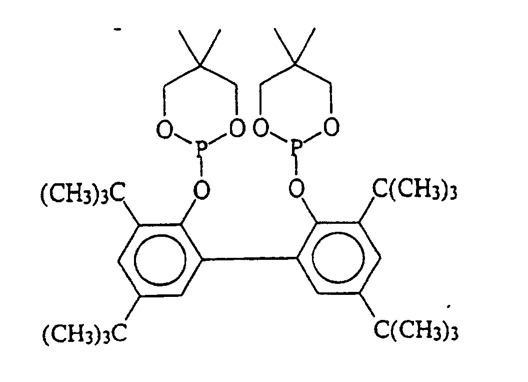
- Phos-4: 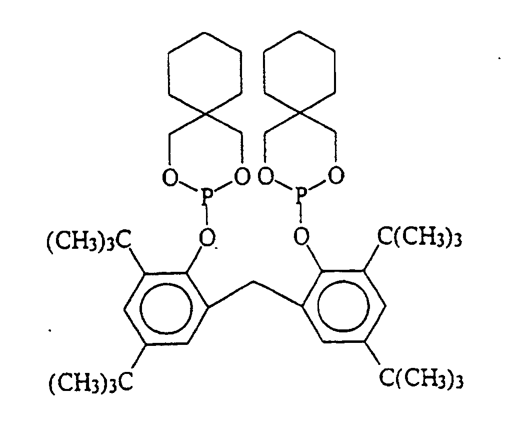
- Phos-5: 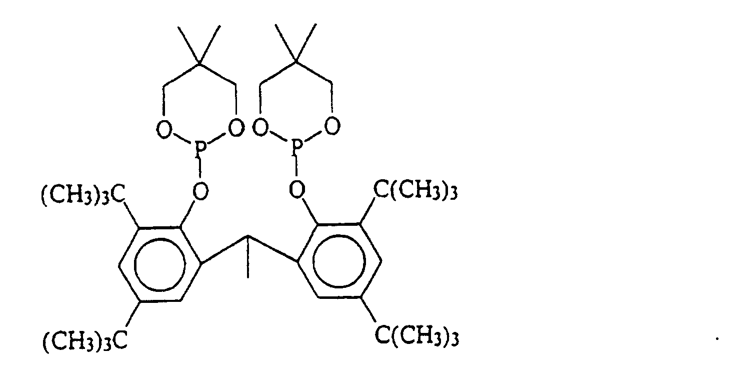
- Phos-6: 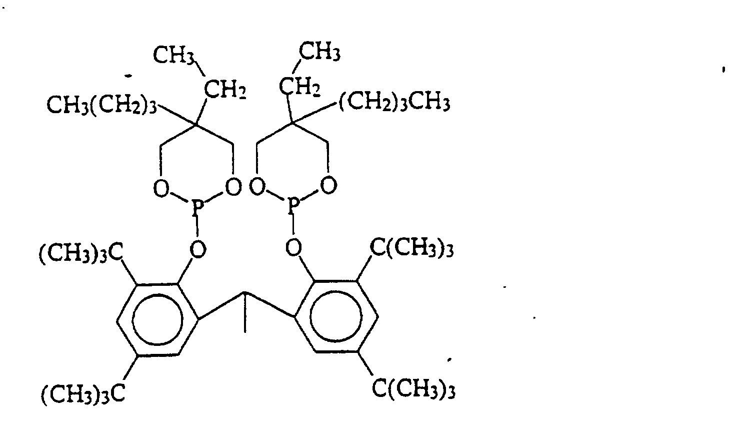
- Phos-7: 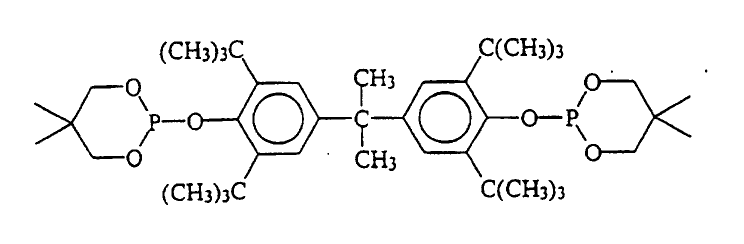
- Phos-8:

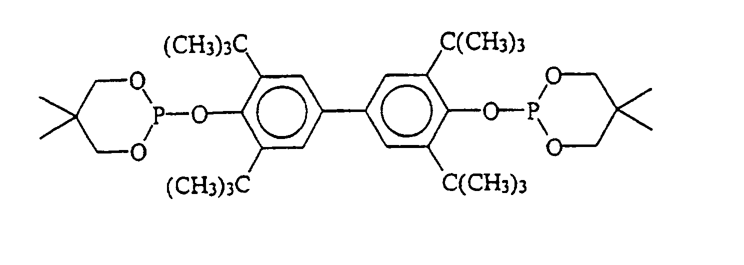

Illustrative properties for the compositions made in polypropylene are found in Table 1. The weights are in parts by weight based on the weight of the polypropylene resin. The base formulation comprises 100 parts of unstabilized polypropylene. The test phosphite stabilizer was blended/ mixed with the resin using Turbula Blender for 30 minutes. The stabilized resin formulation was extruded at 100 rpm from a 0.54 cm (1 inch) diameter single screw Killion brand extruder at 500°F (260°C).

After each of the first, third and fifth extrusions, resin pellets were compression molded into 125 mil (3.2 mm) thick plaques at 370°F (188°C) and specimen yellowness index (YI) was determined. Low YI values indicate less yellowing. Additionally, the melt flow rate (in grams/10 minutes) was measured (ASTM-D-1238) on the pellets after the first, third, and fifth extrusions. The closer the melt flow rate after the fifth extrusion is to the melt flow rate after the first extrusion indicates the superior process stabilization of polypropylene.

**Table 1.**

| Sample: | 1 | 2 | 3 | 4 | 5 | 6 |
|---|---|---|---|---|---|---|
| Phenol | 800 | 800 | 800 | 800 | 800 | 800 |
| CaSt | 800 | 800 | 800 | 800 | 800 | 800 |
| Phos-1 | 0 | 800 | 0 | 0 | 0 | 0 |
| Phos-2 | 0 | 0 | 800 | 0 | 0 | 0 |
| Phos-3 | 0 | 0 | 0 | 800 | 0 | 0 |
| Phos-4 | 0 | 0 | 0 | 0 | 800 | 0 |
| Phos-5 | 0 | 0 | 0 | 0 | 0 | 800 |

| MFR | | | | | | |
|---|---|---|---|---|---|---|
| 1 | 4.76 | 3.60 | 3.85 | 3.83 | 3.94 | 4.10 |
| 3 | 5.59 | 3.62 | 4.06 | 3.86 | 3.89 | 4.08 |
| 5 | 6.09 | 3.65 | 4.24 | 3.88 | 3.81 | 4.04 |

| Color, YI | | | | | | |
|---|---|---|---|---|---|---|
| 1 | 5.87 | 4.27 | 4.03 | 3.76 | 4.96 | 4.26 |
| 3 | 9.92 | 4.87 | 4.31 | 4.07 | 4.74 | 4.21 |
| 5 | 14.63 | 4.63 | 4.85 | 4.92 | 5.06 | 5.19 |

As seen by these data, compositions made with the phosphites of the present invention (i.e., Phos-2 to 5) illustrate remarkably good retention of molecular weight as indicated by the very small shift in the melt flow rate (MFR) even after as repeated extrusions. Outstanding color retention is also retained with the addition of the phosphites of the present invention. Phos-1 represents the best state of the art phosphite that is presently commercially available, ULTRANOX 641. These data unexpected show that the properties obtained with the present phosphites approaches that of the ULTRANOX 641.

Several illustrative phosphites were analyzed by thermal gravimetric analysis (TGA) to better understand their thermal stability. The results of these studies are found in Table 2.

**Table 2.**

| TGA of butylated phenol based bisphosphites at a heating rate of 20°C/minute from room temperature to 500°C under nitrogen. | | | |
|---|---|---|---|
| Compound | Percent Weight Loss | | |
| | 2% | 5% | 10% |
| | Temperature (°C) | | |
| Phos-2 | 229 | 257 | 277 |
| Phos-3 | 226 | 247 | 264 |
| Phos-4 | 295 | 316 | 334 |
| Phos-5 | 235 | 260 | 278 |

As seen by the data within Table 2, the phosphites of the present invention have outstanding thermal stability. The higher the temperature, the less volatile the phosphite and the greater the overall thermal stability.

The hydrolytic stability of several illustrative phosphites of the present invention was measured under a variety of temperatures and relative humidities. The results are summarized in Table 3.

**Table 3**

| Hydrolytic Stability Studies | | |
|---|---|---|
| Compound | RT/RH ∼80% | 30°C/RH ∼70% |
| Phos-2 | 1,344 h | 551 h |
| Phos-3 | 2,000 h | 735 h |
| Phos4 | 744 h | 271 h |
| Phos-5 | 2000 h | 929 h |
| Phos-6 | Not determined | 186 h |

The times in hours to gain 1% in the weight were recorded. It was unexpected for compounds Phos-2, Phos-3, and Phos-5 to have such high stability without the addition of any amines.

The melting points of several of the phosphites of the present invention were compared to the melting points of several other phosphites outside the scope of the present invention. The data is located within Table 4.

**Table 4.**

| Phosphite | melting point (°C) |
|---|---|
| Phos-3 | 190-192 |
| Phos-5 | 208-210.5 |
| Phos-7 | 212-214 |
| Phos-8 | >290 |

Phos-3 and -5 are substituted in the 2,2' positions on the bis-aromatic rings, whereas Phos-7 and -8 are substituted in the 4,4' positions. Also, the structure of Phos-3 corresponds roughly with the structure of Phos-8, and have similar molecular weights. Likewise the structure of Phos-5 corresponds roughly with the structure of Phos-7. As can be seen by these data, substitution in the 2,2' positions unexpectedly affords a lower melting point than that obtained with similar substitution in the 4,4' positions. The lower melting point is desirable for obtaining a better dispersion in many thermoplastic resins. In this respect, phosphites having melting points of about 210°C or lower are especially useful and desired. Thus, the phosphites of the present invention meet the long felt need for phosphites that have melting points within the desired range and have outstanding hydrolytic stability.

Although the present invention has been described in terms of the presently preferred embodiments, it is to be understood that the disclosure is not to be interpreted as limiting. Various alterations and modifications will no doubt become apparent to those skilled in the art after having read the above disclosure.

## Claims

1. A compound having the formula: 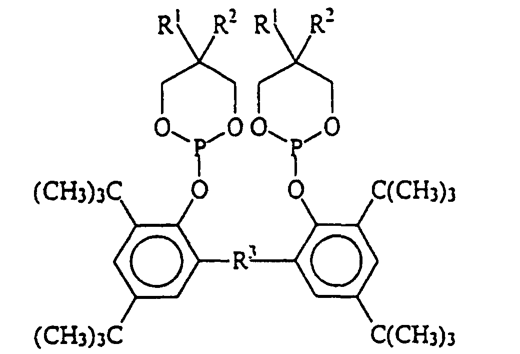 wherein each R¹ and R² is independently selected from hydrogen, alkyl radicals of from 1 to 17 carbon atoms, or wherein R¹ and R² are connected to form a five-membered, six-membered, or seven-membered cycloalkyl ring or substituted five-membered, substituted six-membered, or substituted seven-membered cycloalkyl ring, and R³ is an alkylidene radical of from 1 to 12 carbon atoms or a direct carbon to carbon bond.

2. The compound according to claim 1, wherein each R¹ and R² is independently methyl, ethyl, or wherein R¹ and R² are connected to form a five-membered, six-membered, or seven-membered cycloalkyl ring or substituted five-membered, substituted six-membered, or substituted seven-membered cycloalkyl ring, and R³ is a carbon to carbon bond, methylene, ethylene, 1,1-ethyl, or isopropylene residue.

3. The compound according to claim 1, wherein the compound is selected from the group consisting of 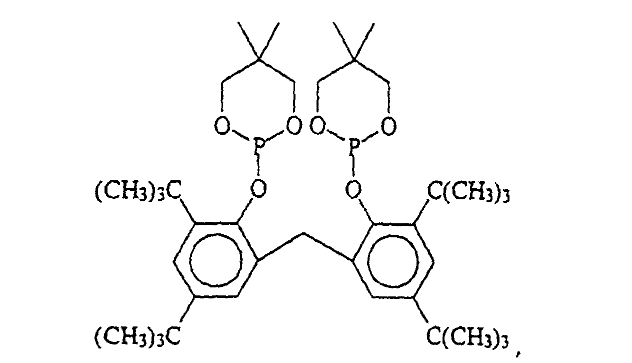 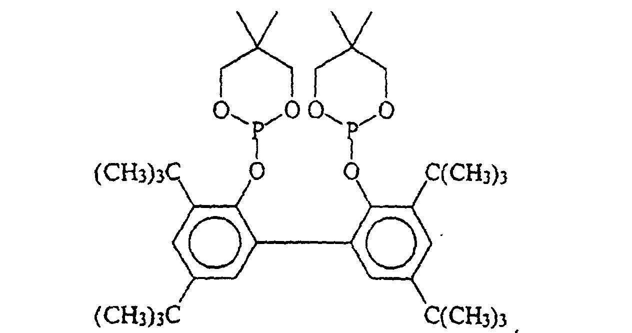 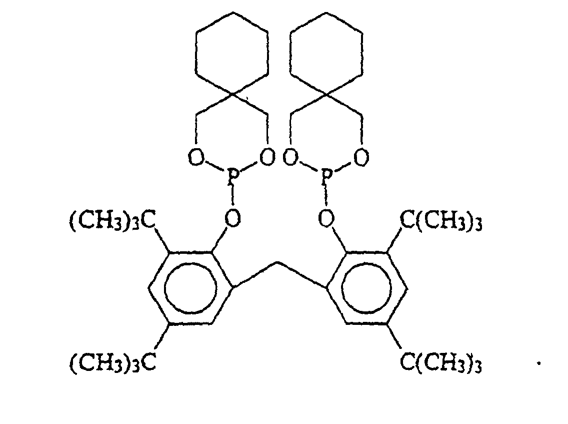 and

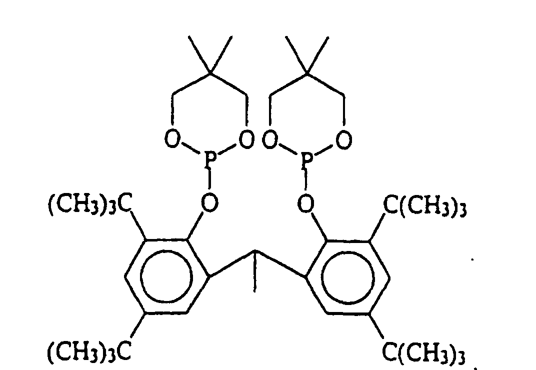

4. A stabilized composition comprising:
(a) a polymeric material susceptible to degradation upon exposure to heat, radiation, or a combination of heat and radiation, and
(b) an amount of a compound effective to reduce the degradation of the polymeric material upon exposure to heat, radiation, or a combination of heat and radiation, wherein the compound has the formula: 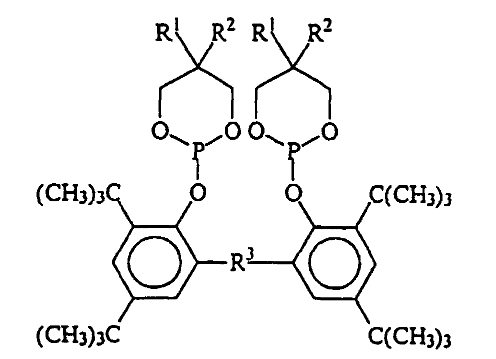 wherein each R¹ and R² is independently selected from hydrogen, alkyl radicals of from 1 to 17 carbon atoms, or wherein R¹ and R² are connected to form a five-membered, six-membered, or seven-membered cycloalkyl ring or substituted five-membered, substituted six-membered, or substituted seven-membered cycloalkyl ring, and R³ is an alkylidene radical of from 1 to 12 carbon atoms or a direct carbon to carbon bond.

5. The stabilized composition of claim 4, wherein each R¹ and R² is independently methyl, ethyl, or wherein R¹ and R² are connected to form a five-membered, six-membered, or seven-membered cycloalkyl ring or substituted five-membered, substituted six-membered, or substituted seven-membered cycloalkyl ring, and R³ is a carbon to carbon bond, methylene, ethylene, 1,1-ethyl, or isopropylene residue.

6. The stabilized composition of claim 4, wherein the compound is selected from the group consisting of 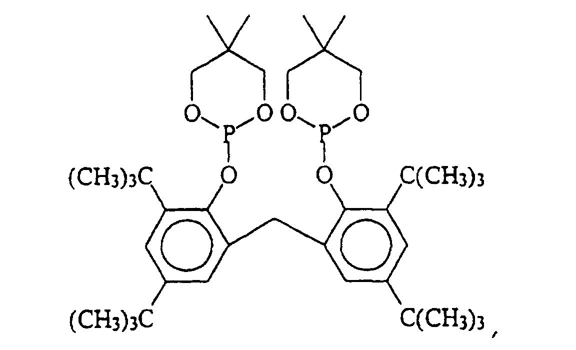 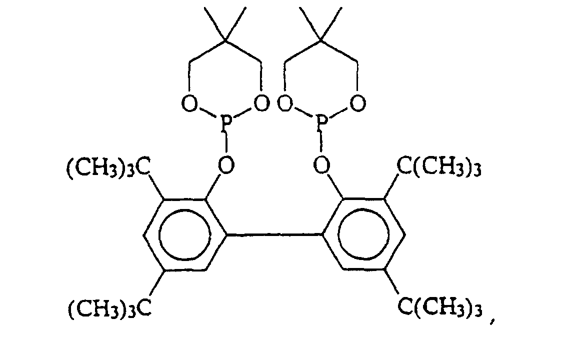 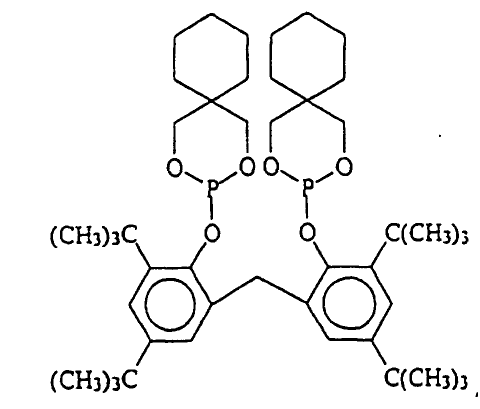 and

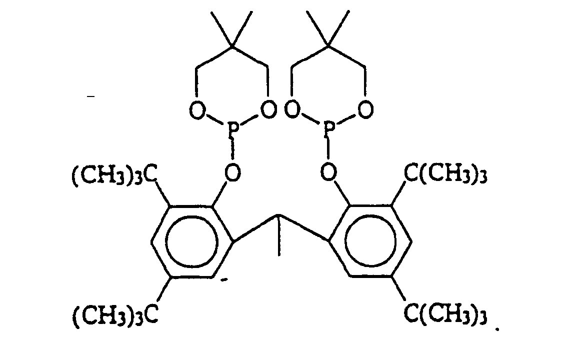

7. The stabilized composition according to claim 4, wherein the compound is present from 0.01 to 0.5 weight percent based on the weight of the polymeric material.

8. The stabilized composition according to claim 4, wherein the polymeric material is an alpha-olefin homo-polymer or copolymer.

9. The stabilized composition according to claim 4, wherein the stabilized composition further comprises at least one member of the group consisting of phenolic antioxidants, UV absorbers, light stabilizers, metal deactivators, peroxide scavengers, other phosphites, phosphonites, thiosynergists, hydroxylamines, tertiary amine oxides, neutralizers, hydrotalcites, 3-arylbenzofuranones, nucleating agents, clarifiers, fillers, reinforcing agents, plasticizers, lubricants, pigments, flameproofing agents, anti-static agents, blowing agents, and amine compounds.

10. A stabilized composition comprising:
(a) a polymeric material susceptible to degradation upon exposure to heat, radiation, or a combination of heat and radiation, and
(b) an amount of a compound effective to reduce the degradation of the polymeric material upon exposure to heat, radiation, or a combination of heat and radiation, wherein the compound has the formula: 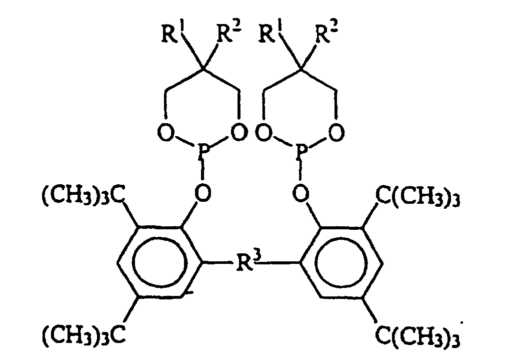 wherein each R¹ and R² is independently selected from hydrogen, alkyl radicals of from 1 to 17 carbon atoms, or wherein R¹ and R² are connected to form a five-membered, six-membered, or seven-membered cycloalkyl ring or substituted five-membered, substituted six-membered, or substituted seven-membered cycloalkyl ring, and R³ is an alkylidene radical of from 1 to 12 carbon atoms or a direct carbon to carbon bond;
(c) a hindered phenol compound; and
(d) calcium stearate.

## Patentansprüche

1. Verbindung der Formel: 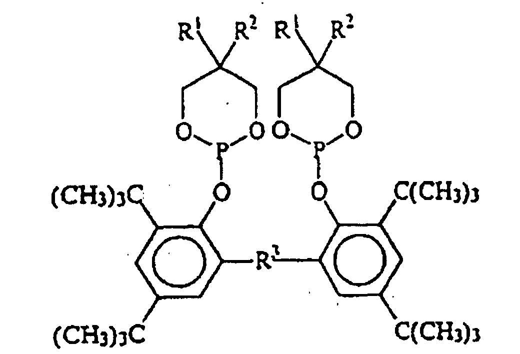 worin jedes R¹ und R² unabhängig gewählt ist aus Wasserstoff, Alkylresten mit 1 bis 17 Kohlenstoffatomen, oder worin R¹ und R² miteinander verbunden sind unter Bildung eines fünfgliedrigen, sechsgliedrigen oder siebengliedrigen Cycloalkylrings oder eines substituierten fünfgliedrigen, substituierten sechsgliedrigen oder substituierten siebengliedrigen Cycloalkylrings und R³ ein Alkylidenrest mit 1 bis 12 Kohlenstoffatomen oder einer direkten Kohlenstoff-zu-Kohlenstoff-Bindung ist.

2. Verbindung nach Anspruch 1, wobei jedes R¹ und R² unabhängig Methyl, Ethyl ist, oder wobei R¹ und R² miteinander verbunden sind unter Bildung eines fünfgliedrigen, sechsgliedrigen oder siebengliedrigen Cycloalkylrings oder eines substituierten fünfgliedrigen, substituierten sechsgliedrigen oder substituierten siebengliedrigen Cycloalkylrings und R³ eine Kohlenstoff-zu-Kohlenstoff-Bindung, Methylen, Ethylen, 1,1-Ethyl oder ein Isopropylenrest ist.

3. Verbindung nach Anspruch 1, wobei die Verbindung gewählt ist aus der Gruppe bestehend aus: 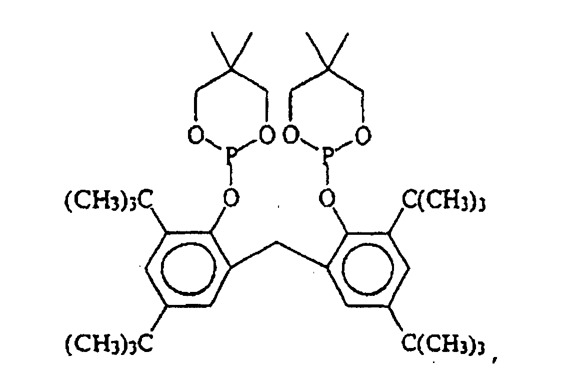 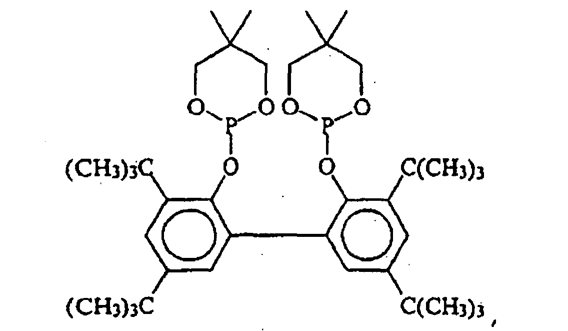 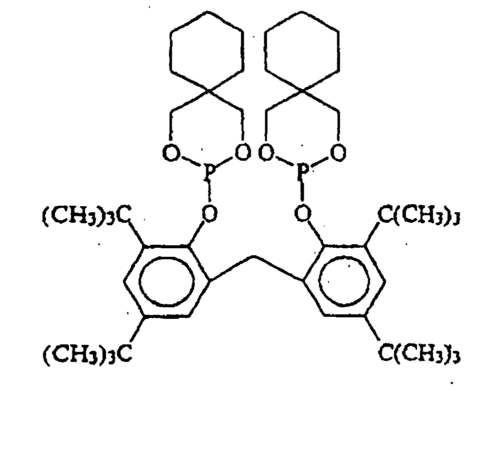 und

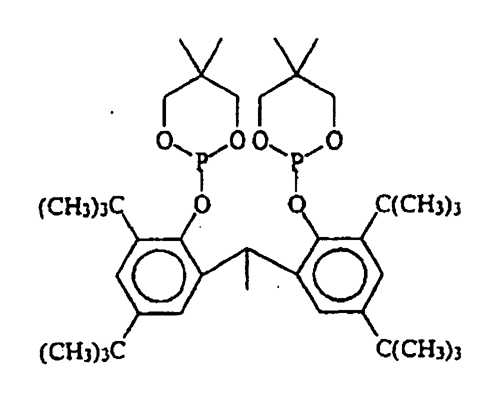

4. Stabilisierte Zusammensetzung, umfassend:
(a) ein polymeres Material, das für einen Abbau bei Aussetzung an Wärme, Strahlung oder eine Kombination aus Wärme und Strahlung empfänglich ist, und
(b) eine Menge einer Verbindung, die wirksam ist zur Verminderung des Abbaus des polymeren Materials bei Aussetzung an Wärme, Strahlung oder eine Kombination aus Wärme und Strahlung, wobei die Verbindung die Formel besitzt: 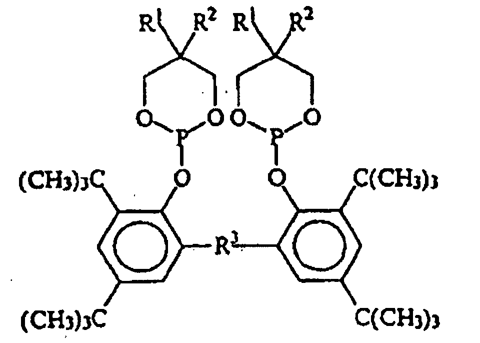
worin jedes R¹ und R² unabhängig gewählt ist aus Wasserstoff, Alkylresten mit 1 bis 17 Kohlenstoffatomen, oder worin R¹ und R² miteinander verbunden sind unter Bildung eines fünfgliedrigen, sechsgliedrigen oder siebengliedrigen Cycloalkylrings oder eines substituierten fünfgliedrigen, substituierten sechsgliedrigen oder substituierten siebengliedrigen Cycloalkylrings und R³ ein Alkylidenrest mit 1 bis 12 Kohlenstoffatomen oder einer direkten Kohlenstoff-zu-Kohlenstoff-Bindung ist.

5. Stabilisierte Zusammensetzung nach Anspruch 4, wobei jedes R¹ und R² unabhängig Methyl, Ethyl ist, oder wobei R¹ und R² miteinander verbunden sind unter Bildung eines fünfgliedrigen, sechsgliedrigen oder siebengliedrigen Cycloalkylrings oder eines substituierten fünfgliedrigen, substituierten sechsgliedrigen oder substituierten siebengliedrigen Cycloalkylrings und R³ eine Kohlenstoff-zu-Kohlenstoff-Bindung, Methylen, Ethylen, 1,1-Ethyl oder Isopropylenrest ist.

6. Stabilisierte Zusammensetzung nach Anspruch 4, wobei die Verbindung gewählt ist aus der Verbindung bestehend aus: 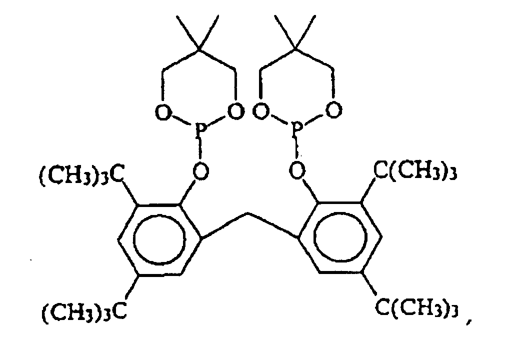 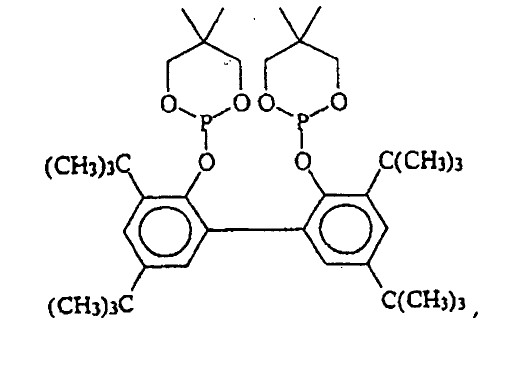 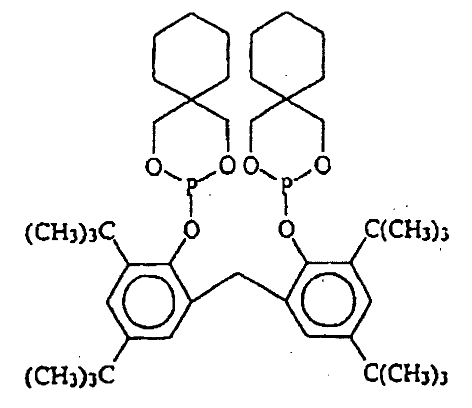 und

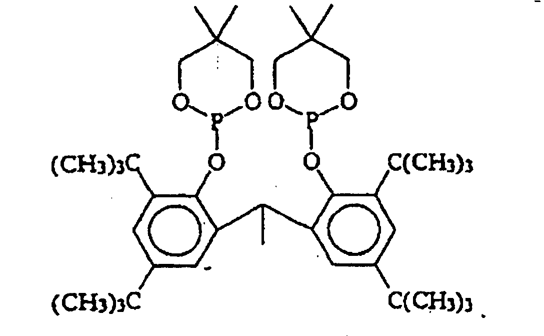

7. Stabilisierte Zusammensetzung nach Anspruch 4, wobei die Verbindung mit 0,01 bis 0,5 Gew.-%, bezogen auf das Gewicht des polymeren Materials, vorliegt.

8. Stabilisierte Zusammensetzung nach Anspruch 4, wobei das polymere Material ein α-Olefin-Homopolymer oder -Copolymer ist.

9. Stabilisierte Zusammensetzung nach Anspruch 4, wobei die stabilisierte Zusammensetzung weiter mindestens einen Vertreter der Gruppe bestehend aus phenolischen Antioxidantien, UV-Absorbern, Lichtstabilisatoren, Metalldeaktivatoren, Peroxid-Fängern, anderen Phosphiten, Phosphoniten, Thiosynergisten, Hydroxylaminen, tertiären Aminoxiden, Neutralisatoren, Hydrotalkiten, 3-Arylbenzolfuranonen, Nukleierungsmitteln, Klärmitteln, Füllmitteln, Verstärkungsmitteln, Weichmachungsmitteln, Gleitmitteln, Pigmenten, Flammschutzmitteln, Antistatikmitteln, Treibmitteln und Aminverbindungen umfasst.

10. Stabilisierte Zusammensetzung, umfassend:
(a) ein polymeres Material, das für einen Abbau bei Aussetzung an Wärme, Strahlung oder eine Kombination aus Wärme und Strahlung empfänglich ist, und
(b) eine Menge einer Verbindung, die wirksam ist zur Verminderung des Abbaus des polymeren Materials bei Aussetzung an Wärme, Strahlung oder eine Kombination aus Wärme und Strahlung, wobei die Verbindung die Formel besitzt: 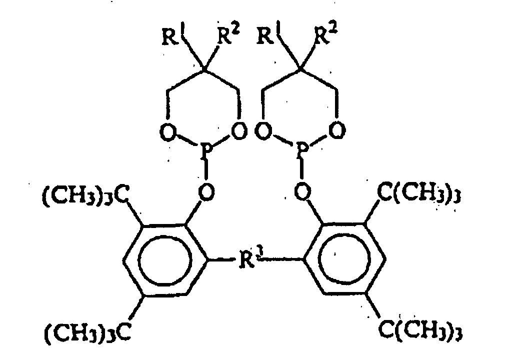 worin jedes R¹ und R² unabhängig gewählt ist aus Wasserstoff, Alkylresten mit 1 bis 17 Kohlenstoffatomen, oder worin R¹ und R² miteinander verbunden sind unter Bildung eines fünfgliedrigen, sechsgliedrigen oder siebengliedrigen Cycloalkylrings oder eines substituierten fünfgliedrigen, substituierten sechsgliedrigen oder substituierten siebengliedrigen Cycloalkylrings und R³ ein Alkylidenrest mit 1 bis 12 Kohlenstoffatomen oder einer direkten Kohlenstoff-zu-Kohlenstoff-Bindung ist,
(c) eine gehinderte Phenolverbindung; und
(d) Calciumstearat.

## Revendications

1. Composé répondant à la formule : 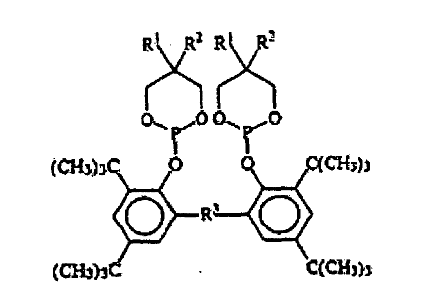 dans laquelle chaque R¹ et R² est choisi indépendamment parmi l'hydrogène, les radicaux alkyles comportant de 1 à 17 atomes de carbone, ou dans laquelle R¹ et R² sont reliés pour former un cycle cycloalkyle pentagonal, hexagonal ou heptagonal ou un cycle cycloalkyle pentagonal substitué, hexagonal substitué ou heptagonal substitué, et R³ est un radical alcoylidène comportant de 1 à 12 atomes de carbone ou une liaison directe carbone à carbone.

2. Composé selon la revendication 1,
dans lequel chaque R¹ et R² est indépendamment méthyle, éthyle, ou dans lequel R¹ et R² sont reliés pour former un cycle cycloalkyle pentagonal, hexagonal ou heptagonal ou un cycle cycloalkyle pentagonal substitué, hexagonal substitué ou heptagonal substitué, et R³ est une liaison carbone à carbone, méthylène, éthylène, 1,1-éthyle ou un résidu d'isopropylène.

3. Composé selon la revendication 1,
dans lequel le composé est sélectionné parmi le groupe constitué de 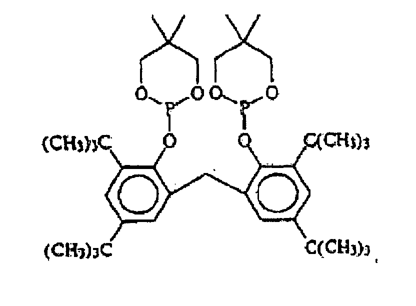 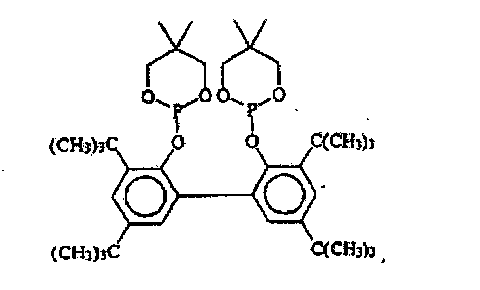 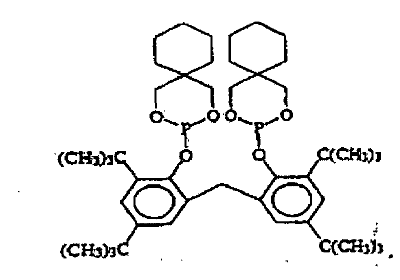 and

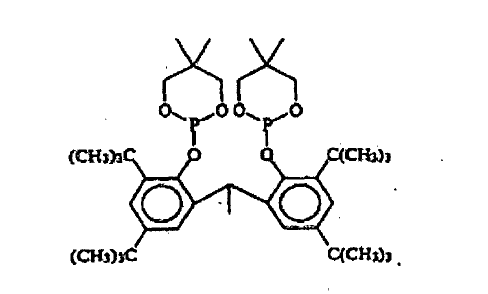

4. Composition stabilisée comprenant :
(a) une matière polymère capable de se dégrader à la suite d'une exposition à la chaleur, au rayonnement ou à une combinaison de chaleur et de rayonnement, et
(b) une quantité d'un composé efficace pour réduire la dégradation de la matière polymère à la suite d'une exposition à la chaleur, au rayonnement ou à une combinaison de chaleur et de rayonnement, dans laquelle le composé répond à la formule : 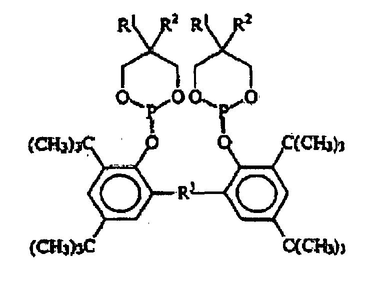
dans laquelle chaque R¹ et R² est sélectionné indépendamment parmi l'hydrogène, les radicaux alkyles comportant de 1 à 17 atomes de carbone, ou dans laquelle R¹ et R² sont reliés pour former un cycle cycloalkyle pentagonal, hexagonal ou heptagonal ou un cycle cycloalkyle pentagonal substitué, hexagonal substitué ou heptagonal substitué, et R³ est un radical alcoylidène comportant de 1 à 12 atomes de carbone ou une liaison directe carbone à carbone.

5. Composition stabilisée de la revendication 4,
dans laquelle chaque R¹ et R² est indépendamment méthyle, éthyle, ou dans laquelle R¹ et R² sont reliés pour former un cycle cycloalkyle pentagonal, hexagonal ou heptagonal ou un cycle cycloalkyle pentagonal substitué, hexagonal substitué ou heptagonal substitué, et R³ est une liaison carbone à carbone, méthylène, éthylène, 1,1-éthyle ou un résidu d'isopropylène.

6. Composition stabilisée selon la revendication 4,
dans laquelle le composé est choisi parmi le groupe constitué de : 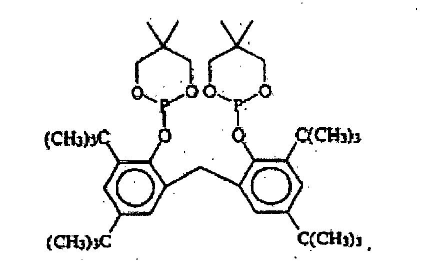 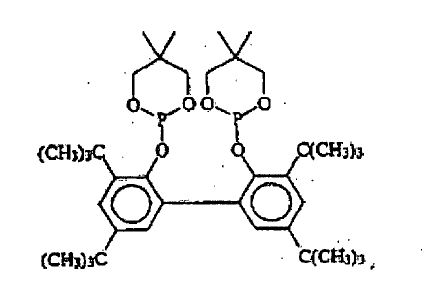 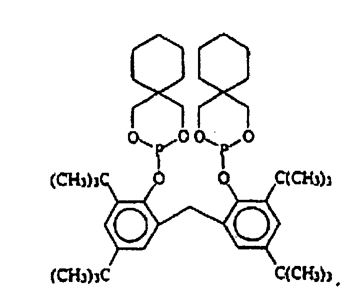 and

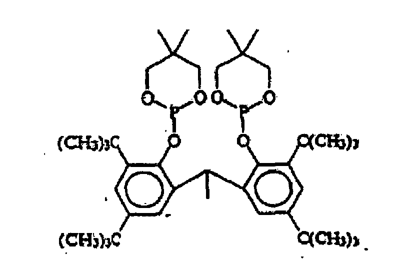

7. Composition stabilisée selon la revendication 4,
dans laquelle le composé est présent à partir de 0,01 à 0,5 pour cent en poids basé sur le poids de la matière polymère.

8. Composition stabilisée selon la revendication 4,
dans laquelle la matière polymère est un homo-polymère ou un copolymère alpha-oléfinique.

9. Composition stabilisée selon la revendication 4,
dans laquelle la composition stabilisée comprend en outre au moins un membre du groupe constitué d'antioxydants phénoliques, d'absorbeurs d'ultraviolet, de stabilisateurs de la lumière, de désactivateurs du métal, d'épurateurs de peroxyde, d'autres phosphites, phosphonites, thiosynergistes, hydroxylamines, oxydes aminés tertiaires, neutralisants, hydrotalcites, 3-arylbenzofuranones, agents de nucléation, clarifiants, charges, agents renforçants, plastifiants, lubrifiants, pigments, agents ignifuges, agents antistatiques, agents gonflants et composés aminés.

10. Composition stabilisée comprenant :
(a) une matière polymère capable de se dégrader à la suite d'une exposition à la chaleur, au rayonnement ou à une combinaison de chaleur et de rayonnement, et
(b) une quantité d'un composant efficace pour réduire la dégradation de la matière polymère à la suite d'une exposition à la chaleur, au rayonnement ou à une combinaison de chaleur et de rayonnement, dans laquelle le composé répond à la formule : 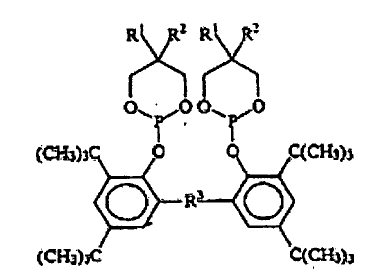 dans laquelle chaque R¹ et R² est sélectionné indépendamment parmi l'hydrogène, les radicaux alkyles comportant de 1 à 17 atomes de carbone, ou dans laquelle R¹ et R² sont reliés pour former un cycle cycloalkyle pentagonal, hexagonal ou heptagonal ou un cycle cycloalkyle pentagonal substitué, hectagonal substitué ou heptagonal substitué, et R³ est un radical alkylidène comportant de 1 à 12 atomes de carbone ou une liaison directe carbone à carbone ;
(c) un composé phénolé empêché et
(d) du stéarate de calcium.
